# EUROPÄISCHE PATENTSCHRIFT

(11) **EP 4 111 825 B1**
(45) Veröffentlichungstag und Bekanntmachung des Hinweises auf die Patenterteilung: **08.04.2026**
(21) Anmeldenummer: 21707981.3
(22) Anmeldetag: 24.02.2021
(51) Int. Cl.: H05B 6/80, H05H 1/46

(54) **VORRICHTUNG ZUM SCHMELZEN VON METALLEN**
DEVICE TO MELT METALS
DISPOSITIF POUR FONDRE DES MÉTAUX

(30) Priorität: 26.02.2020 DE 102020202484
(43) Veröffentlichungstag der Anmeldung: 04.01.2023
(73) Patentinhaber: Thermal Processing Solutions GmbH, 5282 Braunau am Inn - Ranshofen (AT)
(72) Erfinder: WOLF, Gotthard, 40822 Mettmann (DE); KESSLER, Andreas, 01723 Wilsdruff (DE)
(74) Vertreter: Burger, Hannes Alfred
(86) Internationale Anmeldenummer: PCT/EP2021/054553
(87) Internationale Veröffentlichungsnummer: WO 2021/170652

(56) Entgegenhaltungen:
- US-A1- 2005 163 696
- US-B1- 6 362 449

## Beschreibung

Die Erfindung betrifft eine Vorrichtung zum Schmelzen von Metallen, insbesondere Nichteisenmetallen. Dabei sollen unter den Begriff Metalle auch entsprechende Legierungen verstanden werden, deren Schmelztemperatur ebenfalls möglichst kleiner 1000 °C sein sollte. Die Erfindung ist insbesondere zum Schmelzen von Aluminium und dessen Legierungen geeignet.

Bisher ist es üblich zum Schmelzen dieser Metalle in unterschiedlich konfigurierten Schmelzöfen Öl- oder Gasbrenner einzusetzen mit deren heißer Flamme das jeweilige Metall in die flüssige Phase überführt werden kann. Bei der Verbrennung der jeweiligen Kohlenwasserstoffverbindung wird durch chemische Oxidation gebildetes CO₂ in relativ großen Mengen in die Erdatmosphäre frei gesetzt, was unter dem Klimawandelaspekt extrem nachteilig ist.

Des weiteren ist es auch bekannt, eine induktive Erwärmung von Metall als Schmelzgut durchzuführen. Infolge der dabei auftretenden elektrischen Wechselfelder tritt aber eine starke Rührwirkung der gebildeten Schmelze auf. Diese führt in hohem Maß zu Oxideinschlüssen im Metall, so dass die Qualität der mit der so erhaltenen Schmelze hergestellten Bauteile stark nachteilig beeinflusst wird. Induktiv beheizte Schmelzöfen sind weiterhin in der Regel infolge ungünstiger Ankopplungsbedingungen schlecht geeignet zum Einschmelzen grobstückigem Kreislaufmaterial oder Gussbruch.

Auch bekannt sind elektrisch widerstandsbeheizte Öfen. Diese weisen meist nur eine geringe Leistung und eignen sich daher in der Regel nur zum Warmhalten bereits flüssigen Metalls.

Es gab auch bereits Bestrebungen Plasma zum Schmelzen von Metall einzusetzen. Dabei wurde ein elektrischer Lichtbogen genutzt, um Plasma auszubilden. Dazu wurde eine Elektrode mit noch ungeschmolzenem Schmelzgut kontaktiert. Dies führt aber zu Kontaminationen des jeweiligen zu schmelzenden Metalls, die nicht vermeiden bzw. gezielt beeinflusst werden können. Ein Kontaktverlust führt zum sofortigen Abbruch des Lichtbogens während des Niederschmelzens und muss daher durch sehr aufwändige Prozessführung vermieden werden.

So ist es aus US 6 362 449 B1 bekannt gewesen, mittels Mikrowellen ein Plasma zu generieren und dessen Energie zu nutzen, um insbesondere eine Abfallbehandlung durchführen zu können.

US 2005/0163696 A1 betrifft Möglichkeiten zur Synthese von Kohlenstoffnanoröhrchen mit Nutzung von mit Mikrowellen generiertem Plasma.

Es ist daher Aufgabe der Erfindung, Möglichkeiten für das Schmelzen von Metall anzugeben, bei denen der anlagentechnische Aufwand in Grenzen gehalten, die Freisetzung von CO₂ vor Ort sowie eine Kontamination der erhaltenen Schmelze in weitesten Grenzen vermieden werden können.

Erfindungsgemäß wird diese Aufgabe mit einer Vorrichtung, die die Merkmale des Anspruchs 1 aufweist, gelöst. Vorteilhafte Ausgestaltungen und Weiterbildungen der Erfindung können mit in abhängigen Ansprüchen bezeichneten Merkmalen realisiert werden.

Bei der erfindungsgemäßen Vorrichtung zum Schmelzen von Metallen, insbesondere Nichteisenmetallen, deren Schmelztemperatur bevorzugt kleiner 1000 °C ist, ist an einem Schmelzofen eine Einrichtung zur Ausbildung eines Plasmas in Form einer freien Gasfackel und Wärmeübertragung durch Strahlung auf das Schmelzgut angeordnet. Dabei kann es sich um einen ansonsten bekannten und auch unverändert konfigurierten Schmelzofen handeln. Vorzugsweise eignen sich Schacht- Herd- aber auch Tiegelöfen.

Die Einrichtung ist an eine elektrische Spannungsversorgung und außerdem ist mindestens eine erste Zuführung für ein Plasmagas, mit dem das Plasma ausbildbar ist, angeschlossen.

Die Einrichtung ist so ausgebildet, dimensioniert, angeordnet und/oder ausgerichtet, dass das ausgebildete Plasma in einem Abstand zum metallischen Schmelzgut angeordnet ist, und dabei mit dem Plasma ein Heißgasstrom ausbildbar ist, der in Richtung des Schmelzguts ausgerichtet ist. Das ausgebildete Plasma kommt somit in keinem Fall mit dem ungeschmolzenen Schmelzgut oder der Schmelze in unmittelbaren Kontakt. Es kann dadurch auch der Einsatz einer Elektrode, die Schmelzgut oder Schmelze kontaktiert vermieden werden, da keine solche Elektrode vorhanden sein sollte.

Das ausgebildete Plasma sollte dabei ausschließlich als Wärmequelle fungieren. Dadurch kann die Erwärmung des metallischen Schmelzguts ausschließlich mittels der Wärmeenergie des Heißgasstroms und durch vom Plasma emittierte Wärmestrahlung erreicht werden.

Das generierte Plasma sollte dazu so ausgebildet und in der Vorrichtung so angeordnet sein, dass keine zumindest nahezu keine freien elektrisch geladenen Teilchen (insbesondere Ionen, Elektronen) mit dem aufzuschmelzenden Metall in direkten Kontakt treten können. Dazu kann auch der Volumenstrom und die Strömungsgeschwindigkeit mindestens eines weiteren zugeführten Gases, mit dem der Heißgasstrom im Wesentlichen ausgebildet wird, entsprechend eingestellt bzw. geregelt werden.

Das Plasma kann auch mit einem weiteren Gas (Sekundärgas) so vermischt werden, so mit dem Plasma eine stabile Plasmafackel oder Gasfackel ausgebildet wird, die auch Strahlungsenergie in Richtung des Schmelzgutes abgibt. Das Schmelzgut kann mit dem Heißgas der Plasma- oder Gasfackel und zusätzlich der Strahlungsenergie zur Wärmeübertragung und zum Schmelzen des Schmelzguts im Ofenraum des Schmelzofens genutzt werden.

Zur Aufnahme des geschmolzenen Metalls ist eine Schmelzwanne oder ein Tiegel im Schmelzofen angeordnet.

In einer erfindungsgemäßen Alternative kann die Einrichtung mit einem Mikrowellengenerator und daran angeschlossenem Resonator mit mindestens einer Reflexionsplatte für generierte Mikrowellen, der als Hohlleiter ausgebildet ist, ausgebildet sein. Außerdem sollte eine elektrische Zündeinrichtung mit einer gegenüber einem Gehäuse elektrisch isolierten Zündelektrode Bestandteil der Einrichtung sein. Die Zündeinrichtung dient dabei ausschließlich dem Zünden eines Plasmas und kann angeschaltet werden, wenn ein Plasma nach mit generierten Mikrowellen erfolgter Ausbildung freier Ladungsträger des eingesetzten Plasmagases in ausreichend großer Menge ausgebildet worden ist.

Das Plasma sollte dabei im Bereich stehender Mikrowellen innerhalb des Resonators vor der mindestens einen Reflexionsplatte mit dort strömendem Plasmagas ausgebildet sein. Eine translatorische Bewegung des ausgebildeten Plasmas kann weitestgehend vermieden werden, so dass es eine stationäre Wärmequelle zur Ausbildung eines Heißgasstromes bilden kann.

Das Plasma sollte bei dieser Alternative im Gehäuse der Einrichtung ausgebildet sein, wobei der Heißgasstrom über mindestens ein Strömungsführungselement in Richtung Schmelzgut in das Innere des Schmelzofens gerichtet werden sollte. Als Strömungsführungselement(e) kann man rohr- oder kanalförmige Elemente einsetzen, durch die das heiße Gas in Richtung Schmelzgut strömen kann. Strömungsführungselemente können aus einem Glas, einer Glaskeramik oder reinem keramischen Werkstoff gebildet sein. Es können auch mindestens zwei Strömungsführungselemente vorhanden sein. Dabei kann ein Strömungsführungselement zumindest in einem Bereich innerhalb eines Strömungsführungselements mit größerem Innendurchmesser oder größerer freier Querschnittsfläche angeordnet sein und dort eine Abschirmung gegen Wärme bilden. Strömungsführungselemente sollten sich nicht direkt berühren.

In einer weiteren Alternative kann die Einrichtung mit zwei in einem Abstand zueinander angeordneten Elektroden, zwischen denen ein Plasmagas in Richtung Schmelzgut strömt und eine elektrische Bogenentladung abläuft, gebildet sein. Dabei kann die Einrichtung analog zu einem an sich bekannten Plasmabrenner, wie er zum Schneiden und Schweißen von Werkstoffen eingesetzt wird, ausgebildet sein. Dabei ist eine Elektrode in der Regel aus Wolfram, Hafnium oder einer Legierung davon gebildet. Die Gegenelektrode kann ein Gehäuse bilden, durch das Plasmagas strömt. Lediglich die Dimensionierung und die Betriebsparameter sollte man an die Applikation zum Schmelzen von Metall anpassen. Aber auch in diesem Fall sollte das gebildete Plasma nicht mit dem Schmelzgut in direkten Kontakt gelangen und lediglich als Wärmequelle zum Erhitzen eines Gases dienen, das als Heißgasstrom oder einer freien Gasfackel zum Schmelzen genutzt werden kann.

An das Gehäuse kann mindestens eine weitere Zuführung für Plasmagas oder ein weiteres Gas (Sekundärgas) angeschlossen sein. Diese weitere Zuführung kann in einem Abstand zur ersten Zuführung angeordnet sein. Bevorzugt kann die weitere Zuführung im Bereich des ausgebildeten Plasmas bzw. in Strömungsrichtung dahinter angeordnet sein.

Vorteilhaft kann die elektrische Leistung des Mikrowellengenerators der Einrichtung oder der elektrischen Bogenentladung, der Volumenstrom des Plasmagases und/oder der Volumenstrom des weiteren Gases geregelt werden. Dabei kann beispielsweise eine gemessene Temperatur die Regelgröße darstellen. Dies kann die Temperatur des Heißgasstromes, des Plasmas, des Schmelzguts oder der Schmelze sein. Die Temperatur sollte bevorzugt berührungslos, beispielsweise mittels Thermografie oder einem Pyrometer bestimmt werden. Es kann aber auch die Temperatur geregelt werden. Dies kann in Abhängigkeit der Prozessführung beispielsweise zum Schmelzen bzw. Warmhalten einer Schmelze erfolgen.

Es besteht auch die Möglichkeit, den Mikrowellengenerator so zu regeln, dass die Länge der mit dem Plasma gebildeten Gasfackel oder die Länge der ausgebildeten Plasmafackel in Richtung Schmelzgut angepasst wird, so dass insbesondere der Anteil an nutzbarer Strahlungsenergie beeinflusst werden kann.

Vorteilhaft kann man Plasmagas tangential mit einem Drall in das Gehäuse einströmen lassen, bevor es unter den Einfluss der Mikrowellen gelangt. Dadurch kann die Kontaktzeit verlängert und die freien Ladungsträger (Ionen, Elektronen) können effektiver auf ein höheres Energielevel gebracht werden, so dass der Wirkungsgrad erhöht werden kann.

Es kann aber auch allein oder zusätzlich ein weiteres Gas tangential in das Gehäuse einströmen. Dabei besteht die Möglichkeit, Plasmagas parallel zur Längsachse des Gehäuses der Einrichtung oder der Strömungsrichtung des Heißgasstromes in das Gehäuse einzuführen. Es kann dabei durch eine Einströmöffnung, die unmittelbar neben der Zündeinrichtung angeordnet sein kann, in das Gehäuse der Einrichtung einströmen.

Einlässe für Plasmagas können über den Umfang verteilt am Gehäuse angeordnet sein, über die Plasmagas aus der Zuführung in das Gehäuse einströmen kann.

Vorteilhaft kann man Argon als Plasmagas und/oder weiteres Gas einsetzen, da es in Bezug zum Schmelzgut und der Schmelze vollkommen inert ist. Stickstoff als Plasma oder weiteres Gas sollte man insbesondere beim Schmelzen von Aluminium oder dessen Legierungen vermeiden. Sauerstoff oder Luft fördern die Oxidation und sind daher diesbezüglich nachteilig.

Man kann aber auch ein Gasgemisch als Plasmagas oder weiteres Gas einsetzen. Dabei kann man die jeweiligen Gasanteile des Gasgemisches an das jeweilige zu schmelzende Metall anpassen. So kann man beispielsweise Argon mit Luft mischen, wobei der Luftanteil kleiner als der Argonanteil sein sollte.

Es kann auch eine Rückführung für aus dem Schmelzofen abgezogenes heißes Gas vorhanden sein, mit der eine erneute Nutzung dieses Gases als Plasmagas und/oder weiteres Gas im Kreislauf oder eine anderweitige Nutzung der Restwärme erreicht werden kann. Ein Kreislaufbetrieb ermöglicht es die erforderliche Menge an zuzuführendem Plasmagas oder weiterem Gas zu verringern, was insbesondere für Argon die Kosten reduziert.

Es kann aber auch die Restwärme des abgezogenen heißen Gases, beispielsweise für das Warmhalten der erhaltenen Schmelze oder eine Vorwärmung von insbesondere weiterem Gas ausgenutzt werden.

Bei der Erfindung können Mikrowellen mit einer Frequenz im Bereich 500 MHz bis 5000 MHz, bei einer elektrischen Leistung im Bereich 5 kW bis 3000 kW eingesetzt werden.

Der Gesamtvolumenstrom an Plasmagas und/oder weiterem Gas sollte mindestens so groß gewählt werden, dass der in den Schmelzofen einströmende Heißgasstrom das ungeschmolzene Schmelzgut erreicht, zumindest jedoch in seine Nähe gelangt, so dass das Schmelzgut infolge Wärmestrahlung aufgeschmolzen wird.

Vorteilhaft ist es außerdem eine Zündelektrode einer Zündeinrichtung für Plasma, das mittels Mikrowellen generiert wird, in einer Strahlenfalle anzuordnen. Dazu kann man diese Zündelektrode in einem rohr- oder kanalförmigen Element anordnen, dessen Innendurchmesser oder dessen innere freie Querschnittsfläche kleiner ist, als der/die des Gehäuses der Einrichtung in dem das Plasma ausgebildet ist. Besonders günstig ist es dabei, wenn die Spitze dieser Elektrode im rohr- oder kanalförmigen Element zurückgesetzt ist, d.h. dass diese Spitze im Inneren der Strahlenfalle angeordnet ist. Mittels einer solchen Ausführung kann die Lebensdauer dieser Zündelektrode erhöht und es können Kontaminationen der Schmelze mit dem Werkstoff dieser Elektrode vollständig vermieden werden.

Die Einrichtung zur Ausbildung eines Plasmas kann vorteilhaft in einer schwenkbaren Vorrichtung am Ofenkörper befestigt sein, so dass eine gezielte und veränderbare Führung der Gasfackel, Plasmafackel oder des Heißgasstromes im Ofenraum ermöglicht ist. Dadurch kann die Richtung einer Gasfackel oder Plasmafackel verändert werden und eine lokal gezielte Erwärmung des jeweiligen Schmelzgutes im Ofenraum erreicht werden. Es können so beispielsweise äußere Ränder oder das Zentrum des im Ofenraum angeordneten Schmelzgutes je nach momentanen Bedarf mehr oder weniger erwärmt werden.

Bei der Erfindung kann man das Gehäuse zumindest bereichsweise Kühlen. Es kann auch eine Temperierung insbesondere an dem/den Strömungsführungselement(en) vorteilhaft sein, um vorteilhaft die Wirkung starker Temperaturwechsel in diesem Bereich zu verringern, besonders vorteilhaft sollten große kurzzeitig auftretende Temperaturdifferenzen vermieden werden.

Mit der Erfindung kann, wie bereits ausgeführt, der Anteil an frei gesetztem CO₂ erheblich reduziert werden. Vorhandene Schmelzöfen können mit sehr geringem Aufwand um- bzw. nachgerüstet werden. Die Qualität des erschmolzenen Metalls entspricht zumindest der, wie sie mit herkömmlichen Gas- oder Ölbrennern erreicht werden kann. Kontaminationen und Oxidation des erschmolzenen Metalls können zumindest weitestgehend, wenn nicht sogar vollständig vermieden werden.

Nachfolgend soll die Erfindung beispielhaft näher erläutert werden. Dabei können Merkmale unabhängig vom jeweiligen Beispiel oder der entsprechenden Darstellung in einer Figur miteinander kombiniert werden. Die einzelnen Merkmale sind nicht auf das jeweilige Beispiel oder die jeweilige Darstellung beschränkt.

Dabei zeigen:
- Figur 1: eine schematische Darstellung eines Beispiels einer erfindungsgemäßen Vorrichtung und
- Figur 2: eine Schnittdarstellung durch einen Teilbereich eines Beispiels einer Einrichtung zur Ausbildung eines Plasma mittels Mikrowellen.

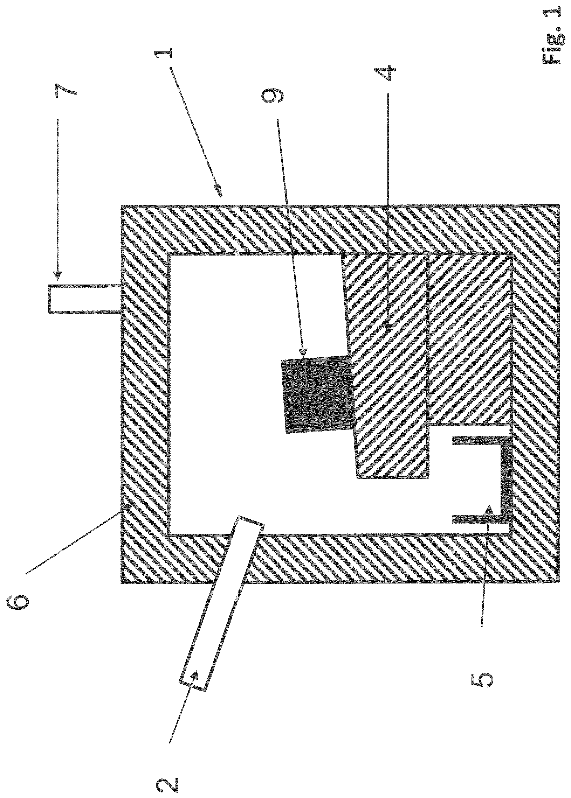

In Figur 1 ist schematisch ein Beispiel einer erfindungsgemäßen Vorrichtung mit einem Schmelzofen 1 gezeigt. An einer Seite des Schmelzofens 1 ist eine Tür (nicht dargestellt vorhanden, über die eine Beschickung des Schmelzofens 1 mit ungeschmolzenem Schmelzgut 9 möglich ist. Das ungeschmolzene Schmelzgut 9 kann dabei auf einer Schmelzbühne 4 abgesetzt sein, die in einem Winkel, bei dem gezeigten Beispiel einem Winkel von 10 ° schräg geneigt ist, so dass geschmolzenes Metall von der Schmelzbühne 4 in den Tiegel 5 oder eine nicht dargestellte Schmelzwanne abtropfen kann.

Am Gehäuse 6 des Schmelzofens 1 ist eine Einrichtung 2 zur Ausbildung eines Plasmas angeflanscht und dabei mindestens ein hier nicht gezeigtes Strömungsführungselement für einen Heißgasstrom durch die Gehäusewand des Schmelzofens 1 in das Innere des Schmelzofens 1 geführt, so dass mindestens ein Heißgasstrom auf das ungeschmolzene Schmelzgut 9 gerichtet werden kann. Das Gehäuse ist schwenkbar gelagert, so dass dadurch ein Nachführen der mit dem Plasma 8 ausgebildeten Gas-, Plasmafackel oder eines Heißgasstromes während des Schmelzens ermöglicht wird.

Mittels eines in der Gehäusewand 6 des Schmelzofens 1 eingelassenen Sichtfensters kann man den Schmelzvorgang von außen beobachten oder man kann auch von dort eine Temperaturbestimmung im Inneren des Schmelzofens 1 vornehmen.

In Figur 1 ist außerdem ein Abzug 7 für heißes Abgas am Schmelzofen 1 vorhanden, durch den heißes Abgas aus dem Schmelzofen 1 abgezogen werden kann. Das heiße Abgas kann im Kreislauf geführt und beispielsweise als Plasma- oder weiteres Gas wieder rückgeführt werden.

Man kann abgezogenes heißes Abgas auch zum Warmhalten von Schmelze oder für eine andere Nutzung einsetzen, bei der man die Wärmeenergie ausnutzen kann.

Heißes Abgas kann auch durch einen Wärmetauscher geführt werden.

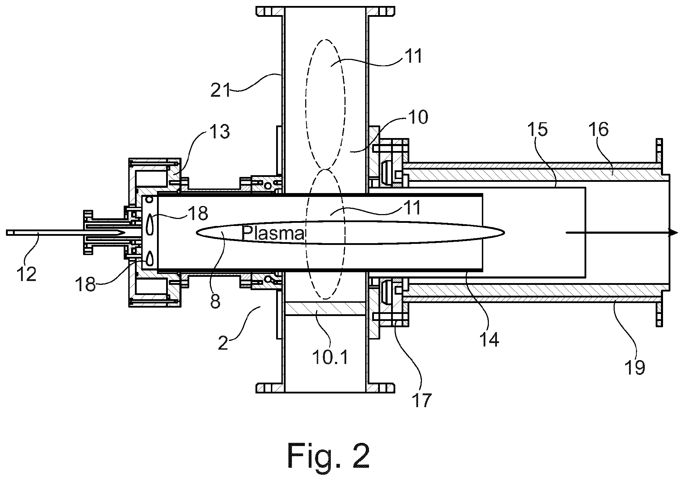

In Figur 2 sind wesentliche Elemente einer Einrichtung 2 zur Ausbildung eines Plasmas gezeigt. Auf die Darstellung eines Mikrowellengenerators, der ein handelsübliches Produkt sein kann, wurde verzichtet. Er ist an den Resonator 10 angeflanscht.

Die mit dem Mikrowellengenerator generierten Mikrowellen 11 können im Resonator 10 als stehende Wellen erhalten werden. Dazu ist auch eine Reflexionsplatte 10.1 in einem Flansch des Gehäuses 13 der Einrichtung 2 einem zweiten Flansch 21 gegenüberliegend angeordnet. An den zweiten Flansch 21 ist der Mikrowellengenerator angeschlossen.

Die Reflexionsplatte 10.1 kann aus einem Glas gebildet sein. In der Nähe der Reflexionsplatte 10.1 für Mikrowellen ist eine Zuführung 17 für ein Kühlgas im Gehäuse 13 der Einrichtung 2 vorhanden. Kühlgas kann zusätzlich zur Kühlwirkung auch entlang der Oberfläche der Reflexionsplatte 10.1 im Inneren des Gehäuses 13 strömen und dieses reinigen bzw. frei von Partikeln zu halten.

In Figur 2 ist links am Gehäuse 13 der Einrichtung 2 eine Zündeinrichtung mit einer stabförmigen Zündelektrode 12 erkennbar. Die an einen Pol einer nicht gezeigten elektrische Spannungsquelle angeschlossen ist. Wird an diese Zündelektrode 12 kurzzeitig eine elektrische Spannung angelegt kann eine zusätzliche Erhöhung der Energie von zugeführtem Plasmagas erreicht werden, die zum Zünden eines Plasmas 8 im Bereich des Resonators 10 und dort ausgebildeten stehenden Mikrowellen 11 führt. Nachdem das Plasma 8 gezündet worden ist, kann die Zündeinrichtung abgeschaltet werden.

Das Gehäuse 13 kann im Bereich der Zündeinrichtung mit der Zündelektrode 12 als Strahlfalle, wie im allgemeinen Teil der Beschreibung erläutert, ausgebildet sein.

Plasmagas kann allein durch die Strahlfalle oder allein durch über den Umfang des Gehäuses 13 verteilt angeordnete Einlässe 18 einströmen. Es ist aber auch eine Kombination davon möglich.

Durch ein tangentiales Einströmen durch bevorzugt mehrere Einlässe 18 kann ein Dralleffekt erreicht und ausgenutzt werden.

Bei dem gezeigten Beispiel ist auf eine weitere Zuführung für ein weiteres Gas verzichtet worden. Mindestens ein weiteres Gas kann aber in das Gehäuse 13 der Einrichtung 2 eingeführt werden, wobei dies bevorzugt im Bereich des ausgebildeten Plasmas 8 erfolgen sollte. Weiteres Gas kann dann zumindest überwiegend für den Heißgasstrom genutzt werden.

Der Heißgasstrom verlässt die Einrichtung 2 in Richtung des eingezeichneten Pfeils. Dazu sind bei diesem Beispiel drei rohrförmige Strömungsführungselemente 14, 15 und 16 vorhanden. Das Quarzglasrohr 14 mit dem kleinsten Durchmesser umschließt dabei das ausgebildete Plasma 8. Es ist in seinem in Richtung Schmelzofen 1 weisenden Bereich, der der Zündeinrichtung gegenüberliegend angeordnet ist, von einem weiteren rohrförmigen Strömungsführungselement 15 umschlossen, das gleichzeitig eine Abschirmung gegen Wärmestrahlung bilden kann.

Im Bereich des Flansches des Gehäuses 13, der in Richtung Schmelzofen 1 weisend angeordnet ist, ist ein drittes rohrförmiges Strömungsführungselement 16, dessen Durchmesser am größten ist, angeordnet. Das dritte Strömungsführungselement 16 kann mindestens bis zur Wand des Gehäuses 6 des Schmelzofens 1 geführt sein, so dass der Heißgasstrom durch eine Durchbrechung in der Wand des Gehäuses 6 auf das im Schmelzofen 1 angeordnete Schmelzgut 9 gerichtet werden kann. Seine Länge kann aber auch so gewählt werden, dass es bis in das Innere des Schmelzofens 1 hinein ragt.

Das dritte rohrförmige Strömungsführungselement 16 kann in einem Flansch 19 des Gehäuses 13 der Einrichtung 2 geführt und gehalten sein. Die Strömungsführungselemente 14, 15 und 16 sind ineinander gesteckt. Sie sollten sich jedoch nicht berühren.

Neben der Zuführung 17 für ein Kühlgas können weitere Bereiche des Gehäuses 13 der Einrichtung 2 zur Kühlung ausgebildet sein und genutzt werden. Dazu kann ein Kühlmedium (Gas oder Flüssigkeit) durch diese Bereiche strömen. Diese Bereiche sollten zumindest in der Nähe des ausgebildeten Plasmas 8 angeordnet sein.

Bei dem gezeigten Beispiel ist eine flanschförmige Kühlung 20 in einem Bereich des Gehäuses 13 der Einrichtung 2 vorgesehen.

## Patentansprüche

1. Vorrichtung zum Schmelzen von Metallen, insbesondere Nichteisenmetallen, bei der an einem Schmelzofen (1) eine Einrichtung (2) zur Ausbildung eines Plasmas (8) angeordnet ist, wobei die Einrichtung (2) an eine elektrische Spannungsversorgung und an die Einrichtung (2) mindestens eine erste Zuführung für ein Plasmagas, mit dem das Plasma (8) ausbildbar ist, angeschlossen ist
**dadurch gekennzeichnet, dass**
die Einrichtung (2) so ausgebildet, dimensioniert, angeordnet und/oder ausgerichtet ist, dass das ausgebildete Plasma (8) in einem Abstand zum Metall als Schmelzgut (9) angeordnet ist, und dabei mit dem Plasma (8) ein Heißgasstrom ausbildbar ist, der in Richtung des Schmelzguts (9) ausgerichtet ist und zur Aufnahme des geschmolzenen Metalls eine Schmelzwanne oder ein Tiegel (5) im Schmelzofen (1) angeordnet ist.

2. Vorrichtung nach Anspruch 1, **dadurch gekennzeichnet, dass** die Einrichtung (2) so ausgebildet ist, dass Plasmagas des Plasmas (8) und weiteres Gas eine deren Heißgase und Strahlungsenergie zur Wärmeübertragung und zum Schmelzen eines jeweiligen Metalls nutzbare freie Gasfackel oder Plasmafackel im Ofenraum des Schmelzofens (1) bilden.

3. Vorrichtung nach Anspruch 1, **dadurch gekennzeichnet, dass** die Einrichtung (2) mit einem Mikrowellengenerator und daran angeschlossenem Resonator (10), der als Hohlleiter und mit mindestens einer Reflexionsplatte (10.1) für generierte Mikrowellen (11) ausgebildet ist.

4. Vorrichtung nach dem vorhergehenden Anspruch, **dadurch gekennzeichnet, dass** die Einrichtung (2) mit einer elektrischen Zündeinrichtung, mit einer gegenüber einem Gehäuse (13) elektrisch isolierten Zündelektrode (12) ausgebildet ist, wobei das Plasma (8) im Bereich stehender Mikrowellen innerhalb des Resonators (10) vor der mindestens einen Reflexionsplatte (10.1) mit dort strömendem Plasmagas und das Plasma (8) im Gehäuse (13) ausgebildet ist,

5. Vorrichtung nach einem der zwei vorhergehenden Ansprüche, **dadurch gekennzeichnet, dass** der Heißgasstrom über mindestens ein Strömungsführungselement (14, 15, 16) in Richtung Schmelzgut (9) gerichtet ist.

6. Vorrichtung nach einem der drei vorhergehenden Ansprüche, **dadurch gekennzeichnet, dass** die Zündelektrode (12) der elektrischen Zündeinrichtung für Plasma in einer Strahlenfalle angeordnet ist.

7. Vorrichtung nach einem der vorhergehenden Ansprüche, **dadurch gekennzeichnet, dass** mit einem regelbaren Mikrowellengenerator die Leistung, die Länge, die Temperatur und/oder die Länge der freien Gasfackel oder Plasmafackel veränderbar ist.

8. Vorrichtung nach einem der vorhergehenden Ansprüche, **dadurch gekennzeichnet, dass** die Einrichtung (2) mit zwei in einem Abstand zueinander angeordneten Elektroden, zwischen denen ein Plasmagas in Richtung Schmelzgut (9) strömt und eine elektrische Bogenentladung abläuft, gebildet ist.

9. Vorrichtung nach einem der vorhergehenden Ansprüche, **dadurch gekennzeichnet, dass** an das Gehäuse (13) der Einrichtung (2) mindestens eine weitere Zuführung für Plasmagas oder ein weiteres Gas angeschlossen ist.

10. Vorrichtung nach einem der Ansprüche 3 bis 6, **dadurch gekennzeichnet, dass** die elektrische Leistung des Mikrowellengenerators oder der elektrischen Bogenentladung der Einrichtung (2), der Volumenstrom des Plasmagases und/oder der Volumenstrom des weiteren Gases regelbar ist.

11. Vorrichtung nach einem der vorhergehenden Ansprüche, **dadurch gekennzeichnet, dass** zumindest das Plasmagas und/oder ein weiteres Gas tangential mit einem Drall in das Gehäuse (13) einströmt.

12. Vorrichtung nach einem der vorhergehenden Ansprüche, **dadurch gekennzeichnet, dass** Argon als Plasmagas und/oder weiteres Gas eingesetzt ist.

13. Vorrichtung nach einem der Ansprüche 3 bis 10, **dadurch gekennzeichnet, dass** Mikrowellen mit einer Frequenz im Bereich 500 MHz bis 5000 MHz, bei einer elektrischen Leistung im Bereich von 5 kW bis 3000 kW eingesetzt sind.

14. Vorrichtung nach einem der vorhergehenden Ansprüche, **dadurch gekennzeichnet, dass** als Plasmagas und/oder weiteres Gas ein Gasgemisch eingesetzt ist.

15. Vorrichtung nach einem der vorhergehenden Ansprüche, **dadurch gekennzeichnet, dass** eine Rückführung für aus dem Schmelzofen (1) abgezogenes heißes Gas vorhanden ist, mit der eine erneute Nutzung dieses Gases als Plasmagas und/oder weiteres Gas im Kreislauf oder eine anderweitige Nutzung der Restwärme erreichbar ist.

16. Vorrichtung nach einem der vorhergehenden Ansprüche, **dadurch gekennzeichnet, dass** die Einrichtung (2) in einer schwenkbaren Vorrichtung am Ofenkörper befestigt ist, so dass eine gezielte und veränderbare Führung der Gasfackel, Plasmafackel oder des Heißgasstromes im Ofenraum ermöglicht wird.

## Claims

1. Apparatus for melting metals, in particular non-ferrous metals, in which a device (2) for forming a plasma (8) is arranged on a melting furnace (1), wherein the device (2) is connected to an electrical voltage supply and at least one first feed for a plasma gas, with which the plasma (8) can be formed, is connected to the device (2), **characterized in that**
the device (2) is designed, dimensioned, arranged and/or aligned in such a way that the plasma (8) formed is arranged at a distance from the metal as the material to be melted (9), and in this case a hot gas stream can be formed with the plasma (8), which hot gas stream is aligned in the direction of the material to be melted (9), and a melting tank or crucible (5) is arranged in the melting furnace (1) to receive the molten metal.

2. The apparatus according to claim 1, **characterized in that** the device (2) is designed in such a way that plasma gas of the plasma (8) and further gas form a free gas torch or plasma torch in the furnace chamber of the melting furnace (1) which can use its hot gases and radiation energy for heat transfer and melting of a respective metal.

3. The apparatus according to claim 1, **characterized in that** the device (2) is provided with a microwave generator and resonator (10) connected thereto, which is designed as a waveguide and has at least one reflection plate (10.1) for generated microwaves (11).

4. The apparatus according to the preceding claim, **characterized in that** the device (2) is formed with an electrical ignition device, with an ignition electrode (12) electrically insulated from a housing (13), the plasma (8) being formed in the region of standing microwaves inside the resonator (10) in front of the at least one reflection plate (10.1) with plasma gas flowing there, and the plasma (8) being formed in the housing (13).

5. The apparatus according to one of the two preceding claims, **characterized in that** the hot gas flow is directed in the direction of the melt material (9) via at least one flow guide element (14, 15, 16).

6. The apparatus according to any one of the three preceding claims, **characterized in that** the ignition electrode (12) of the electric ignition device for plasma is arranged in a radiation trap.

7. The apparatus according to one of the preceding claims, **characterized in that** the power, the length, the temperature and/or the length of the free gas flare or plasma flare can be varied with a controllable microwave generator.

8. The apparatus according to one of the preceding claims, **characterized in that** the device (2) is formed with two electrodes which are arranged at a distance from one another and between which a plasma gas flows in the direction of the material to be melted (9) and an electric arc discharge takes place.

9. The apparatus according to one of the preceding claims, **characterized in that** at least one further supply for plasma gas or a further gas is connected to the housing (13) of the device (2).

10. The apparatus according to any one of claims 3 to 6, **characterized in that** the electrical power of the microwave generator or the electrical arc discharge of the device (2), the volumetric flow of the plasma gas and/or the volumetric flow of the further gas can be controlled.

11. The apparatus according to one of the preceding claims, **characterized in that** at least the plasma gas and/or a further gas flows tangentially into the housing (13) with a swirl.

12. The apparatus according to any one of the preceding claims, **characterized in that** argon is used as plasma gas and/or further gas.

13. The apparatus according to any one of claims 3 to 10, **characterized in that** microwaves having a frequency in the range 500 MHz to 5000 MHz, at an electrical power in the range 5 kW to 3000 kW are used.

14. The apparatus according to any one of the preceding claims, **characterized in that** a gas mixture is used as plasma gas and/or further gas.

15. The apparatus according to one of the preceding claims, **characterized in that** a recirculation system for hot gas withdrawn from the melting furnace (1) is provided, by means of which a renewed use of this gas as plasma gas and/or further gas in the cycle or another use of the residual heat is achievable.

16. The apparatus according to one of the preceding claims, **characterized in that** the device (2) is fixed to the furnace body in a pivotable device, so that a targeted and variable guidance of the gas flare, plasma flare or hot gas flow in the furnace chamber is made possible.

## Revendications

1. Dispositif permettant de faire fondre des métaux, en particulier des métaux non ferreux, dans lequel un dispositif (2) permettant de former un plasma (8) est agencé au niveau d'un four de fusion (1), dans lequel le dispositif (2) est raccordé à une alimentation électrique et au moins une première alimentation, destinée à du gaz de plasma avec lequel le plasma (8) peut être formé, est raccordée au dispositif (2),
**caractérisé en ce que**
le dispositif (2) est conçu, dimensionné, agencé et/ou orienté de sorte que le plasma (8) formé est agencé à une distance du métal tenant lieu de matériau de fonte (9), et un flux de gaz chaud orienté en direction du matériau de fonte (9) peut être formé avec le plasma (8) et un bassin de fusion ou un creuset (5) est agencé dans le four de fusion (1) afin d'accueillir le métal fondu.

2. Dispositif selon la revendication 1, **caractérisé en ce que** le dispositif (2) est conçu de sorte que le gaz de plasma du plasma (8) et d'autres gaz forment dans la chambre de four du four de fusion (1) une torche à gaz libre ou une torche à plasma dont les gaz chauds et l'énergie de rayonnement peuvent être utilisés pour un transfert de chaleur et pour la fusion d'un métal respectif.

3. Dispositif selon la revendication 1, **caractérisé en ce que** le dispositif (2) est muni d'un générateur de micro-ondes et d'un résonateur (10) relié à celui-ci et réalisé sous la forme d'un guide d'ondes creux et comprenant au moins une plaque de réflexion (10.1) destinée aux micro-ondes (11) générées.

4. Dispositif selon la revendication précédente, **caractérisé en ce que** le dispositif (2) est muni d'un dispositif d'allumage électrique, avec une électrode d'allumage (12) isolée électriquement par rapport à un boîtier (13), dans lequel le plasma (8) est formé avec du gaz de plasma qui circule dans une région de micro-ondes stationnaires à l'intérieur du résonateur (10) devant la au moins une plaque de réflexion (10.1), et le plasma (8) est formé dans le boîtier (13).

5. Dispositif selon l'une quelconque des deux revendications précédentes, **caractérisé en ce que** le flux de gaz chaud est dirigé en direction du matériau de fonte (9) par l'intermédiaire d'au moins un élément de guidage de flux (14, 15, 16).

6. Dispositif selon l'une quelconque des trois revendications précédentes, **caractérisé en ce que** l'électrode d'allumage (12) du dispositif d'allumage électrique destiné au plasma est agencée dans un piège à rayons.

7. Dispositif selon l'une quelconque des revendications précédentes, **caractérisé en ce que** la puissance, la longueur, la température et/ou la longueur de la torche à gaz libre ou de la torche à plasma peuvent être modifiées grâce à un générateur de micro-ondes réglable.

8. Dispositif selon l'une quelconque des revendications précédentes, **caractérisé en ce que** le dispositif (2) est formé de deux électrodes agencées à distance l'une de l'autre entre lesquelles un gaz de plasma circule en direction du matériau de fonte (9) et une décharge électrique en arc se produit.

9. Dispositif selon l'une quelconque des revendications précédentes, **caractérisé en ce qu'**au moins une autre alimentation en gaz de plasma ou en un autre gaz est raccordée au boîtier (13) du dispositif (2).

10. Dispositif selon l'une quelconque des revendications 3 à 6, **caractérisé en ce que** la puissance électrique du générateur de micro-ondes ou de la décharge électrique en arc du dispositif (2), le débit volumique du gaz de plasma et/ou le débit volumique de l'autre gaz peuvent être réglés.

11. Dispositif selon l'une quelconque des revendications précédentes, **caractérisé en ce qu'**au moins le gaz de plasma et/ou un autre gaz pénètre dans le boîtier (13) de manière tangentielle avec une torsion.

12. Dispositif selon l'une quelconque des revendications précédentes, **caractérisé en ce que** l'argon est utilisé comme gaz de plasma et/ou autre gaz.

13. Dispositif selon l'une quelconque des revendications 3 à 10, **caractérisé en ce que** des micro-ondes d'une fréquence dans la plage comprise entre 500 MHz et 5000 MHz sont utilisées pour une puissance électrique dans la plage comprise entre 5 kW et 3000 kW.

14. Dispositif selon l'une quelconque des revendications précédentes, **caractérisé en ce qu'**un mélange de gaz est utilisé comme gaz de plasma et/ou autre gaz.

15. Dispositif selon l'une quelconque des revendications précédentes, **caractérisé en ce qu'**il présente un recyclage pour le gaz chaud extrait du four de fusion (1), avec lequel une utilisation renouvelée du dit gaz en tant que gaz de plasma et/ou autre gaz dans le circuit ou une autre utilisation de la chaleur résiduelle est possible.

16. Dispositif selon l'une quelconque des revendications précédentes, **caractérisé en ce que** le dispositif (2) est fixé au corps de four au sein d'un dispositif pivotant, de sorte qu'un guidage ciblé et modifiable de la torche à gaz, de la torche à plasma ou du courant de gaz chaud dans la chambre de four est possible.
